(19) Europäisches Patentamt / European Patent Office / Office européen des brevets

(11) **EP 3 854 121 B1**

(12) **EUROPEAN PATENT SPECIFICATION**

(45) Date of publication and mention
of the grant of the patent:
**27.03.2024  Bulletin 2024/13**

(21) Application number: **18782809.0**

(22) Date of filing: **18.09.2018**

(51) International Patent Classification (IPC):
**H04L 9/40** *(2022.01)*      **H04W 12/00** *(2021.01)*
**H04W 12/80** *(2021.01)*

(52) Cooperative Patent Classification (CPC):
**H04L 63/306; H04W 12/80**

(86) International application number:
**PCT/SE2018/050947**

(87) International publication number:
**WO 2020/060452 (26.03.2020 Gazette 2020/13)**

(54) **METHODS, DEVICES AND COMPUTER PROGRAM PRODUCT OF A LI SYSTEM**

VERFAHREN, VORRICHTUNGEN UND COMPUTERPROGRAMMPRODUKT EINES LI-SYSTEMS

PROCÉDÉS, DISPOSITIFS ET PRODUIT PROGRAMME INFORMATIQUE D'UN SYSTÈME DE LI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.07.2021   Bulletin 2021/30**

(73) Proprietor: **TELEFONAKTIEBOLAGET LM ERICSSON (PUBL)**
**164 83 Stockholm (SE)**

(72) Inventors:
  • **CIONE, Domenico Raffaele**
    **81100 Caserta (IT)**
  • **MAIORINO, Michele**
    **84016 Pagani (SA) (IT)**
  • **ORABONA, Luciano**
    **8100 CASERTA (IT)**
  • **TORO, Francesco**
    **84081 Baronissi (SA) (IT)**

(74) Representative: **Ericsson**
**Patent Development**
**Torshamnsgatan 21-23**
**164 80 Stockholm (SE)**

(56) References cited:
**WO-A1-2009/123514**

• **TENCASTLE LIMITED: "Latest version of X1 draft DTS 103 221 v0.1.0", ETSI DRAFT; LI(16)P42016, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. TC - LI - Lawful Interception 23 June 2016 (2016-06-23), pages 1-45, XP014275791, Retrieved from the Internet: URL:docbox.etsi.org\LI\LI\05-CONTRIBUTIONS \2016\LI(16)P42016_Latest_version_of_X1_dr aft_DTS_103_221_v0_1_0\ts_10322101v010 input for Spain meeting.docx [retrieved on 2016-06-23]**
• **"Lawful Interception (LI); Handover Interface and Service-Specific Details (SSD) for IP delivery; Part 1: Handover specification for IP delivery;LI(12)P29006_TS_102_232-1_v281", ETSI DRAFT; LI(12)P29006_TS_102_232-1_V281, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. LI, no. V2.8.1, 6 December 2011 (2011-12-06), pages 1-52, XP014094391, [retrieved on 2011-12-06]**

**Description**

TECHNICAL FIELD

The present disclosure is related to Lawful Interception. More particularly, the disclosure presents methods, devices and computer program products for enabling correlation over the X interfaces of a LI system.

BACKGROUND

As reference to the standard model, the content of communication is intercepted in the Intercept Control Element, ICE, network node and it is based upon duplication of target communication payload without modification. The ICE sends Intercept Related Information, IRI, raw data via an interface X2 to a Delivery Function for IRI reporting, DF2, and a Mediation Function of IRI, MF2, which generate and deliver to a collection functionality a standardized IRI report based on the received IRI report. Said standardized IRI report is sent over a standardized interface HI2 to the Law Enforcement Management Function, LEMF. The ICE also sends Content of Communications, CC, raw data via an interface X3 to a Delivery Function for CC reporting, DF3, and a Mediation Function of CC, MF3, which generate and deliver to a collection functionality a standardized CC report based on the received CC report. Said standardized CC report is sent over a standardized interface HI3 to the requesting LEMF. Thus, as IRI and CC from the same target and interception occasion are sent over different interfaces, the IRI and CC data packets have to be identified and linked or grouped together. Said identification and grouping or linking of IRI and CC together is called correlation and the process is called correlating.

All these interfaces may use an XID, X1 Identifier, to uniquely identify a Task internally in the LI system. XID is assigned by an Administration mediation function, ADMF, on the X1 interface and is used on X2 and X3 to correlate IRI and CC packets to the specific task.

This standard aims to be generic for all domains and networks.

To satisfy the requirement about the uniqueness of the XID within the entire network as managed by the ADMF, it has been defined as version 4 UUIDs (Universal Unique Identifiers) having the form xxxxxxxx-xxxx-4xxx-yxxx-xxxxxxxxxxxx where x is any hexadecimal digit and y is one of 8, 9, a, or b (e.g. f47ac10b-58cc-4372-a567-0e02b2c3d479) i.e. 128 bit / 16 bytes long.

This large field value should assure the uniqueness of the XID in any network topology, even in the future when Internet of Things, IoT, could drastically increase the number of targets.

The delivery of a standard XID, whose length is rigidly set to 128 bit / 16 bytes, implies a big overhead in the X3 header meaning an impact on performances for payload delivery.

In fact, for each packet, a very large header must be sent impacting the performance over the X3 reference point.

This issue will be an even greater problem for the case of the new 5G network which requests a very low latency even for LI.

On the other hand, in case of small networks, including a limited number of nodes and users, the standardized format of XID appears to be overflowing.

It must be noted that, as of today, a similar field that is used for correlating X3 with X1 is for 4 bytes long ensuring the addressing of more than 4 billion.

ETSI DTS 103 221-1 V0.1.0 "Lawful Interception (LI); Internal interface X1" discloses in clause 5.1 an XID as a UUID (version 4).

SUMMARY

The problem is solved by using a mechanism to provide correlation based on XID that assures the uniqueness in the network but avoids performances impacts on the interfaces between ICE and Intercept Mediation and Delivery unit, IMDU, reducing the overhead.

According to a first aspect, the problem is solved according to a method in an Intercept Mediation and Delivery unit, IMDU, of a Lawful Interception, LI, network for providing a Law Enforcement Agency, LEA, with Intercept Related Information, IRI, and Content of Communications, CC, from data traffic in a digital communications network. Said data traffic is related to one or more target identities and interceptable by means of an Intercepting Control Element, ICE, of said LI network and which ICE being situated in a node of the digital communications network. Said ICE is configured to receive a request to intercept data traffic related to one or more target identities, collect IRI and CC related to said one or more requested target identities, and forward the IRI and CC to the IMDU. The IMDU comprises an Administration mediation function, ADMF, configured to perform: receiving a request for LI activation comprising a target identity to be intercepted; generating an extended task identifier, XID, for the target identity, said extended task identifier XID comprising a node identifier part which identifies the ICE and a pure task identifier part which is an identification number assigned by the ADMF for the target identity; adding the extended task identifier XID to a warrant; forwarding the warrant to the ICE; receiving, from the ICE, IRI and CC data packets wherein at least the headers of the CC data packets comprise the pure task identifier part and not the node identifier part of the extended task identifier XID; identifying the node identifier by means of the data packets source IP address; correlating the received IRI and CC data packets by means of the pure task identifier part and the node identifier; and forwarding the received IRI and CC data packets to the intercept requesting LEA.

According to further one aspect, the problem is solved according to a method of an Intercepting Control Element, ICE, of a node of a Lawful Interception, LI, network. Said LI network provides a Law Enforcement Agency with Intercept Related Information, IRI, and Content of Communications; CC, from data traffic in a digital communications network. Said data traffic is related to one or more target identities and is interceptable by means said ICE and which ICE being situated in a node of the digital communications network. Said LI network comprises an Intercept Mediation and Delivery unit, IMDU. The method comprises: receiving a warrant for LI activation comprising a target identity to be intercepted and an extended task identifier XID for the target identity, said extended task identifier XID comprising a node identifier part which identifies the ICE and a pure task identifier part which is an identification number assigned by the ADMF for the target identity, intercepting and copying the data traffic of a target for generating IRI and CC data packets whenever a target is identified, and identifying the extended task identifier XID corresponding to the target. The method further comprises the steps of extracting the pure task identifier part of the extended task identifier XID, adding the pure task identifier part and not the node identifier part of the extended task identifier XID to at least the headers of the CC data packets and forwarding to the Intercept Mediation and Delivery unit, IMDU, the IRI data packets and CC data packets wherein at least the headers of the CC data packets comprises the pure task identifier part and not the node identifier part of the extended task identifier.

According to another aspect, the problem is solved by means of an Intercept Mediation and Delivery unit, IMDU, of a Lawful Interception, LI, network for providing a Law Enforcement Agency, LEA, with Intercept Related Information, IRI, and Content of Communications, CC, from data traffic in a digital communications network. Said data traffic is related to one or more target identities and interceptable by means of an Intercepting Control Element ICE in a node of said LI network and digital communications network, said node being configured to receive a request to intercept data traffic related to one or more target identities, collect IRI and CC related to said one or more requested target identities, and forward the IRI and CC to the IMDU, comprising a programmable processing unit configured for implementing an Administration mediation function, ADMF, and configured to receive a request for LI activation comprising a target identity to be intercepted, generate an extended task identifier XID for the target identity, said extended task identifier XID comprising a node identifier part which identifies the and a pure task identifier part which is an identification number assigned by the ADMF for the target identity, add the extended task identifier XID to a warrant and forwarding the warrant to the ICE, receive from the ICE, IRI and CC data packets wherein at least the headers of the CC data packets comprise the pure task identifier part and not the node identifier part of the extended task identifier XID, identify the node identifier by means of the data packets source IP address, correlate the received IRI and CC data packets by means of the pure task identifier part and the node identifier, and forward the received IRI and CC data packets to the intercept requesting LEA.

According to further one aspect, the problem is solved by means of an Intercepting Control Element, ICE, of a Lawful Interception, LI, network for providing a Law Enforcement Agency with Intercept Related Information, IRI, and Content of Communications; CC, from data traffic in a digital communications network. Said data traffic is related to one or more target identities and interceptable by means of said ICE of said LI network and which ICE being situated in a node of the digital communications network. Said LI network comprises an Intercept Mediation and Delivery unit, IMDU. Said ICE comprises a programmable processing unit configured to receive a warrant for LI activation comprising a target identity to be intercepted and an extended task identifier XID for the target identity, said extended task identifier XID comprising a node identifier part which identifies the ICE and a pure task identifier part which is an identification number assigned by the ADMF for the target identity, intercept and copy the data traffic of a target for generating IRI and CC data packets whenever a target is identified, identify the extended task identifier XID corresponding to the target, extract the pure task identifier part of the extended task identifier XID, add the pure task identifier part and not the node identifier part of the extended task identifier XID to at least the headers of the CC data packets and forward to the IMDU, the IRI data packets and CC data packets wherein at least the headers of the CC data packets comprise the pure task identifier part and not the node identifier part of the extended task identifier.

According to yet one aspect, the solution is provided by means of a computer program product comprising computer program code loadable into a processing means of an Intercept Mediation and Delivery unit, IMDU, wherein the computer program comprises code adapted to perform the method in the IMDU, when the computer program code is executed in the processing means.

According to yet one aspect, the solution is provided by means of a computer program product comprising computer program code loadable into a processing means of an Intercepting Control Element, ICE, wherein the computer program comprises code adapted to perform the method of the ICE, when the computer program code is executed in the processing means.

The advantages of this solution are the assurance of the uniqueness of the XID within the whole network, and the technique to avoid performances degradation on X3, by reducing the overhead by sending only a part of XID, i.e. pure task identifier.

BRIEF DESCRIPTION OF THE DRAWINGS

The foregoing, and other, objects, features and advantages of the present disclosure will be more readily understood upon reading the following detailed description in conjunction with the drawings in which:

Figure 1 is a block diagram illustrating a Lawful Interception System and Network according to prior art;
Figure 2 is a block diagram illustrating an implementation of an exemplary Lawful Interception System and Network wherein arrangement and methods described herein may be implemented;
Figure 3 is a message and signaling chart illustrating flow of messages in a Lawful Interception system;
Figure 4 is a block diagram of an exemplary embodiment of a LI system and network comprising an arrangement and embodiments thereof Figure 5 is a flowchart of a method S100;
Figure 6 is a flowchart of a first embodiment of the method S100;
Figure 7 is a flowchart of further one embodiment of the method S100;
Figure 8 is a flowchart of the method S200 for limiting the overhead;
Figure 9 is a flowchart of a first embodiment of the method S200;
Figure 10 is a block diagram of another embodiment of the IMDU configured to perform the method S100;
Figure 11 is a block diagram of an ICE for performing the method S200.

DETAILED DESCRIPTION

In the following description, for purposes of explanation and not limitation, specific details are set forth, such as particular circuits, circuit components, techniques, etc. in order to provide a thorough understanding of the present disclosure. However, it will be apparent to one skilled in the art that the present technique may be practiced in other embodiments that depart from these specific details. In other instances, detailed descriptions of well-known methods, devices, and circuits are omitted so as not to obscure the description of the present technique with unnecessary detail.

The term data traffic is herein referring the flow of data packets and signals over a connection in a digital communications network.

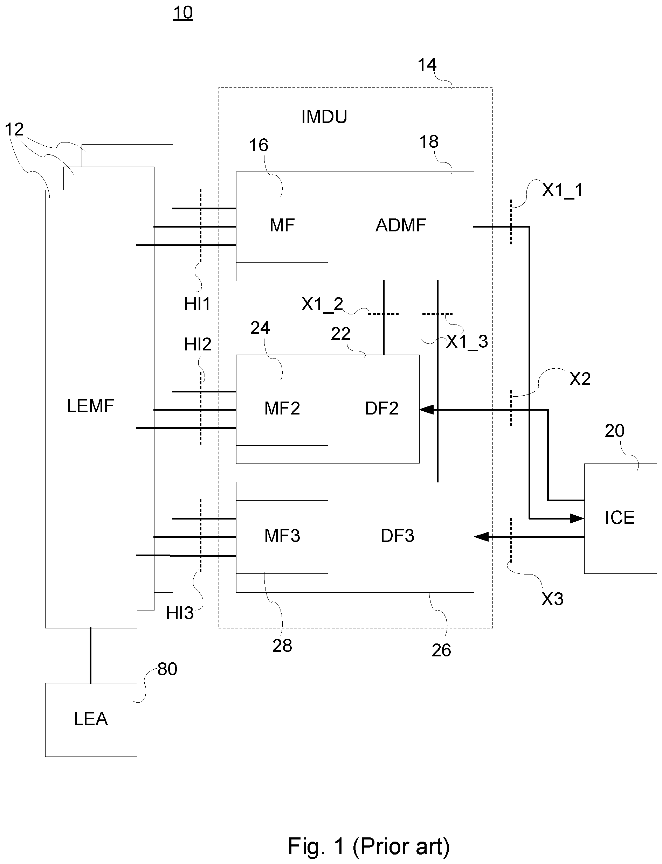

Figure 1 is a block diagram of an exemplary Lawful Interception (LI) system and network 10 according to prior art. Said system and network comprises a number of entities. The exemplary LI system comprises a Law Enforcement Management Function, LEMF, 12 for requesting LI services of the LI system and collecting intercepted information of Intercepting Control Elements, ICEs, in the system. The system shall provide access to the intercepted Content of Communications, CC, and Intercept Related Information, IRI, of a target and services related to the target on behalf of one or more Law Enforcement Agencies, LEAs 80. An intercept request, also denoted Request for LI activation, is sent through a first Handover Interface, HI1, located between the Law Enforcement Management Function 12 and an Intercept Mediation and Delivery Unit, IMDU, 14 comprising a Mediation Function, MF, 16 and an Administration Function, ADMF, 18. Said Mediation Function 16 and Administration Function 18 generates based on said received request a warrant comprising said one or more target identities, and sends said warrant towards an Intercepting Control Element, ICE, 20 via an interface denoted X1_1. The ICE 20 may be connected to a node of a network, e.g. the Internet, a 3 GMS (third generation Mobile Communications System), etc., from which it intercepts said Content of Communications and Intercept Related Information of a mobile target. Said CC and IRI are network related data. As reference to the standard model, see references [1], [2] and [3], the content of communication is intercepted in the ICE network node and it is based upon duplication of target communication payload without modification. In reference [3], the interfaces HI1 and HI2 is specified in more detail. The ICE sends IRI raw data via an interface X2 to a Delivery Function for IRI reporting, DF2, 22 and a Mediation Function of IRI, MF2, 24 that generates and delivers to a collection functionality a standardized IRI report based on the received IRI report. Said standardized IRI report is sent over a standardized interface HI2 to the LEMF 12. The ICE 20 also sends CC raw data via an interface X3 to a Delivery Function for CC reporting, DF3, 26 and a Mediation Function of CC, MF3, 28 which generates and delivers to a collection functionality a standardized CC report based on the received CC report. Said standardized CC report is sent over a standardized interface HI3 to the requesting LEMF 12.

The HI2 and HI3-interfaces represent the interfaces between the LEA and two delivery functions. The delivery functions are used:

- to distribute the Intercept Related Information (IRI) to the relevant LEA(s) via HI2;
- to distribute the Content of Communication (CC) to the relevant LEA(s) via HI3.

According to known internet access services, all the IP streams related to a given target is intercepted and delivered as a whole session data flow regardless any service used within an interception session.

IP Services and bandwidth offered per each subscriber is dramatically increasing.

Although in many countries the communication path between Telecom Operators and LEAs is constantly improved, the available bandwidth is still a precious resource to be carefully preserved.

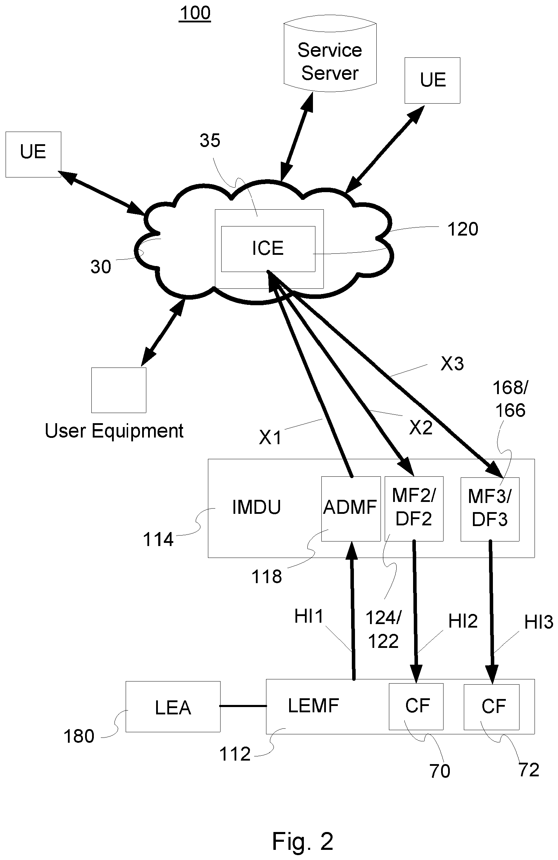

Figure 2 illustrates an example of a Lawful Interception (LI) system and network wherein the different embodiments of the present method, entities and arrangement are applicable.

Lawful Interception (LI) system and network 100 basically comprises the same and corresponding blocks and functionalities as described above in the system and network illustrated in figure 1. Thus, the Law Enforcement Agency 180 is illustrated to be connected to Law Enforcement Management Function, LEMF, 112. However, in some embodiments LEA 180 may be regarded as a node in the system and network, in which node the LEMF 112 is situated. The LEMF 112 provides data and information that is a result of a Lawful Interception session performed by a network operator in the operator domain of the system, as already has been described in the background section of this disclosure. The LEMF 112 may comprise Collection Functions CFs 70, 72 for collecting data received from the IMDU 114.

The operator domain of the LI system involves the Intercept Mediation and Delivery Unit, IMDU, 114 comprising a Mediation Function, MF (not shown) and an Administration Function, ADMF, 118. The IMDU further comprises a second Mediation Function MF2 124, a second Delivery Function DF2 122, third Mediation Function MF3 168, and a third Delivery Function DF3 166.

As already described in the background section of this disclosure, the LI system comprises a number of interfaces. Interfaces HI1, HI2 and HI3 are links between the entities of LEMF 112 and IMDU 114. Interfaces X1 (or X1_1), X2 and X3 are links between an Intercepting Control Element ICE 120 and the entities of the IMDU 114. Which entities that are inter-connected by which interface are illustrated in figure 2.

An Intercepting Control Element, ICE, 120 is applied to a node 35 of an operator's digital communications network 30. Said node may be considered as a common node for the LI system and network and an operator's communication network. In said node, the ICE is capable of intercepting numerous of data traffic and communication between different users, and users and different service nodes providing different services, e.g. Voice-over-IP (VoIP), Video-on-Demand (VoD), etc. If a user is a requested target registered by the ICE 120, the ICE starts an interception session, wherein the signalling traffic of the target is sent as IRI data comprising metadata and the payload of the data traffic is sent as Content of Communications CC to the IMDU 114 of the operator's LI system.

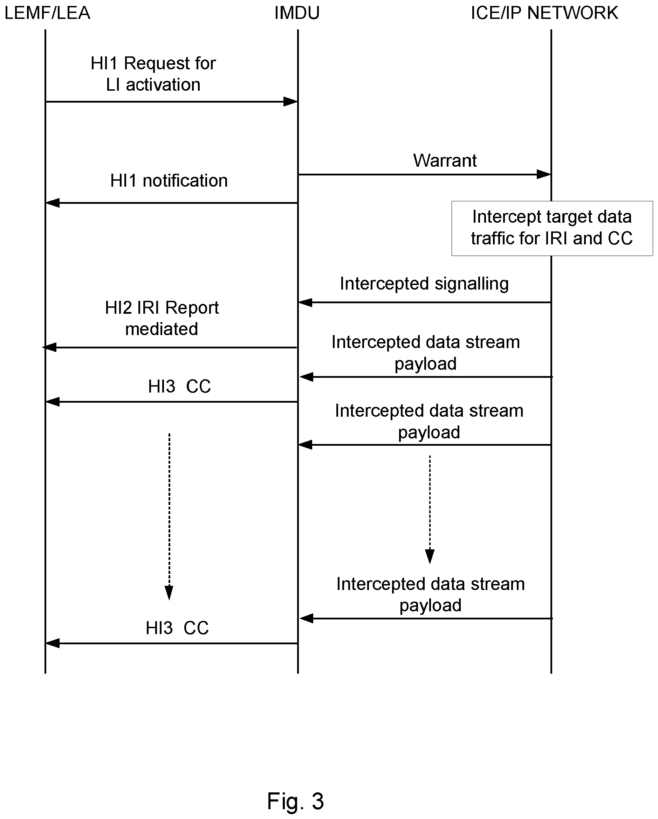

In the message flow chart of figure 3, the flow of data information in the system and network arrangement is illustrated. The LEA sends to a Law Enforcement Management Function unit, LEMF, an intercept request for Legal Interception of the IP flow related to a special target of interest. The LEMF is configured to forward a LI activation request to the IMDU/Mediation system over the ETSI standardized HI1 interface. The intercept request is sent through the first Handover Interface, HI1, located between the LEMF and the node comprising Intercept Mediation and Delivery Unit, IMDU, which comprise the Administration Function, ADMF. The intercept request may be a LI activation request. The request specifies one or more target identities.

The IMDU is adapted to receive the intercept request specifying one or more targets as one or more target identities. When the request for LI activation is received, a warrant is generated by the ADMF based on said one or more target identities. The ADMF is further configured to send via the interface X1 said warrant towards an ICE, Intercepting Control Element, which is arranged to intercept IP traffic through a network operator's network forwarding Internet data traffic flows/streams. The request may comprise a single warrant requesting for information related to the target or targets.

The ICE is configured to receive the warrant specifying one or more services belonging to one or more target identities. By means of the target information in the request, the ICE is capable to to intercept the IP traffic of a specified target, who is using a certain communication service during his/hers session. The ICE is also configured to deliver the IRI report to the node comprising IMDU. The ICE is further configured to generate from the Intercepted signaling IRI data comprising metadata which is delivered to the IMDU/Mediation node via the interface X2. The IMDU generates an Intercept Related Information (IRI) report comprising information related to said one or more target identities upon receipt of said intercepted signaling.

The IMDU generates an HI1 notification that a warrant is sent to the ICE. The notification is sent by the IMDU to the LEMF and the LEA.

The Intercepted signaling relates to the target's session, which generates signaling and data traffic, and which triggers the Lawful Interception of the session to start.

When a session of a target starts, the ICE intercepts the session and the payload of the user data traffic is copied and sent over the X3 interface to the IMDU. The ICE intercepts said payload of the user data traffic, denoted as Content of Communications, CC. Said CC and IRI are network related data. As reference to the standard model, see references [1], [2] and [3], the content communication is intercepted in the ICE network node and it is based upon duplication of target communication payload without modification.

The IMDU comprises a Delivery Function for IRI reporting, DF2, and a Mediation Function of IRI, MF2, that generates and delivers to the LEMF an IRI report based on the received IRI data, which comprises metadata and other information related to said one or more target identities. Said IRI report is sent over a standardized interface HI2 to the LEMF. When generating said IRI report related to a target identity, at least corresponding target and meta data information is inserted. The delivery functions are used to distribute the Intercept Related Information (IRI) to the relevant LEA(s) via HI2.

The IMDU comprises a Delivery Function for CC reporting, DF3, and a Mediation Function of CC, MF3, that generates and delivers to the LEMF the CC based on the received session payload, which comprises information related to said one or more target identities. Said received CC are sent over a standardized interface HI3 to the LEMF as long as the session is ongoing.

The LEMF is adapted to receive the standardized IRI report with target data information related to said one or more target identities. Said information is provided to the requesting LEA, i.e. Law Enforcement Agency.

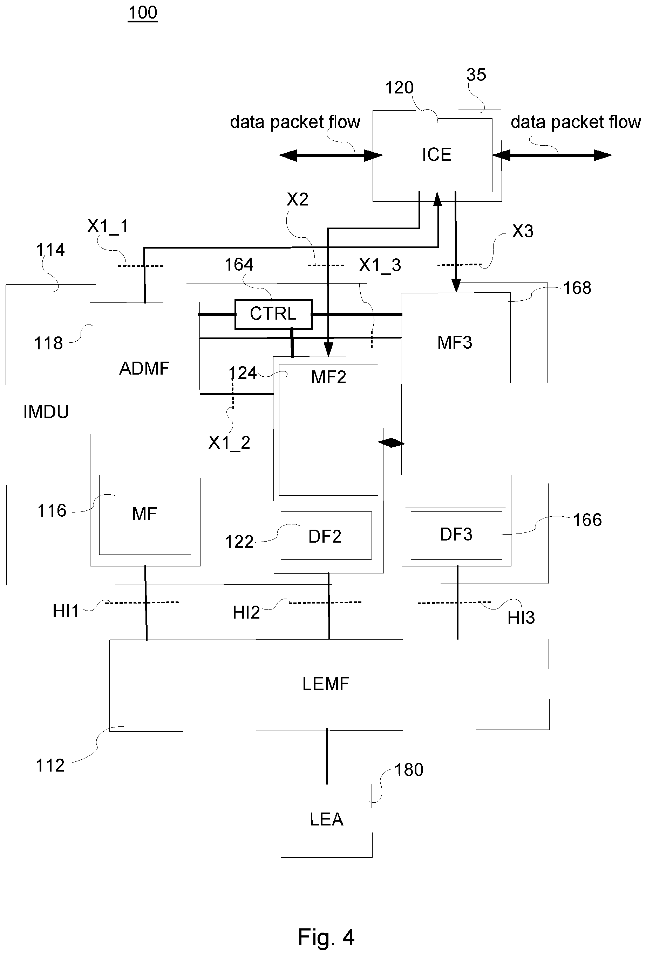

Figure 4 is a block diagram of an exemplary embodiment of a LI system and network comprising an arrangement and embodiments thereof. The LEA 180 sends a first LI request to a LEMF, Law Enforcement Management Function, 112. The first request specifies different kind of data and information for enabling Lawful Interception regarding data traffic flow of a specific target. An intercept request, also denoted Request for LI activation, is sent through a first Handover Interface, HI1, located between the Law Enforcement Management Function 112 and an IMDU, i.e. an Intercept Mediation and Delivery Unit, 114 comprising an Administration Function, ADMF, 118 involving a Mediation Function/Delivery Function, MF/ DF, 116. Said Mediation Function 116 and Administration Function 118 generates based on said received request a warrant comprising said one or more target identities, and sends said warrant towards an Intercepting Control Element, ICE, 120 via an interface denoted X1_1. The ICE 120 is according to the illustrated embodiments situated in a node 35 of a data communications network or telecommunications network which handles and distributes IP data packet flows from which the ICE intercepts Content of Communications, CC, and Intercept Related Information, IRI, of one or more target's communication sessions. Said CC and IRI are network related data. As reference to the standard model, see references [1], [2] and [3], the content of communication is intercepted in the ICE network traffic node and it is based upon duplication of target communication payload without modification. The Intercepting Control Element (ICE) 120 comprises a controller comprising a processor unit configured to control the circuitry, units, blocks and functionalities of the Intercepting Control Element 120 and other circuitry.

The ICE 120 is provided with a receiver unit to receive a request with a warrant specifying one or more targets as one or more target identities. The request is an order to intercept IP Data Traffic passing through the traffic node. The ICE 120 may be provided with data acquiring means for intercepting data traffic through the node using said one or more target identities.

Thus the ICE 120 is configured to collect payload data of the data stream related to one or more target identities for which interception has been requested. A sender in the ICE 120 is adapted to forward the collected data to an IMDU 114, who processes the data. Such a process may be filtering and conversion of the data to another format or standard. The processed data is delivered to a Law Enforcement Management Function 112 for further distribution to the requesting LEA 180.

The ICE 120 sends data of the intercepted payload via an interface X2 to a second Mediation Function entity MF2 124 and a Delivery Function entity DF2 122 for IRI reporting. The Mediation Function and Delivery Function, MF2/ DF2, is configured to generate and deliver to the LEMF 112, which may comprise a Collection Functionality (not shown) in, an IRI report based on the received IRI report comprising metadata related to the CC sent over X3 and HI3. Said IRI report is sent over a standardized interface HI2 to the LEMF 112. The IRI reports comprises metadata is extracted from the application layer in any payload.

Thus, the IMDU 114 is configured to collect metadata from the received Intercept Related Information, insert said metadata into an Intercept Related Information, IRI, report and to forward the IRI report via the second Handover Interface HI2 to the LEA, having access to the LEMF 112, which may comprise a Collection Functionality CF. Said LEA could be regarded as a node in the LI system and network. According to one example, the IRI report may comprise at least one of the following metadata:

- URL;
- IP address;
- File name;

The delivery function unit DF2 122 is used to distribute the Intercept Related Information IRI to the relevant LEA or LEAs via HI2 via one or more LEMFs. The arrangement 114 is therefore adapted to provide a Law Enforcement Agency 180 with payload data of an intercepted data packet flow, e.g. Internet Protocol flow, IP flow, wherein the payload data belongs to one or more target identities using a specific Internet service.

The Intercept Mediation and Delivery Unit 114 also involves a third Mediation Function entity, MF3, and Delivery Function entity, DF3. The MF3 entity 168 is configured to receive intercepted payload data, i.e. Content of Communications (CC) from the Intercepting Control Element, ICE, 120.

According to some embodiments of the arrangement, the Intercept Mediation and Delivery Unit 114 may comprise a second Mediation Function MF2 124, which is configured to generate and forward an Intercept Related Information IRI report via the second Handover Interface HI2 to the Law Enforcement Agency. Said report comprises at least metadata which is based on the received IRI data which is sent to the Law Enforcement Agency via the handover interface HI2.

In more detail, the Intercept Mediation and Delivery Unit 114 of the arrangement is configured to collect metadata from the received Intercept Related Information, e.g. data regarding the target and the targets intercepted service. The MF2 124 is therefore equipped with a collecting means 178, which may be implemented as software or computer program comprising instructions to be executed by a digital processor or computer device.

The IMDU is further configured to insert said metadata into an Intercept Related Information, IRI, report and to forward the IRI report via a second Handover Interface HI2 to the Law Enforcement Management Function unit 112. The MF2 124 is therefore equipped with an inserting means 179, which may be implemented as software or computer program comprising instructions to be executed by a digital processor or computer device.

The IRI report may comprise at least one of the following metadata, which may be inserted by the inserting means 179 of MF2 124 into the metadata inserted in the IRI report:

The IMDU 114 of the arrangement is configured to receive, from the LEA node 180 via Law Enforcement Management Function unit 112, a request to intercept data traffic related to one or more target identities via a first Handover Interface, HI1. The Intercept Mediation and Delivery Unit 114 is configured to receive, from the Law Enforcement Management Function unit 112 and/or LEA node 180, a request for LI activation with identifier information related to one or more target identities via a first Handover Interface HI1 to IMDU 114, said request involving a request for sending IRI and CC back to the Law Enforcement Agency node. The ADMF 118 is configured to distribute a message comprising the identity information via interfaces X1_2 and X1_3 to MF2 124 and MF3 168, respectively, wherein the message is stored. When IRI and payload data and/or CC related to a certain target is identified by the MF2 and MF3, said payload data/CC is forwarded to the requesting LEA via the LEMS functionality.

As a summary, the arrangement comprises an IMDU 114, which comprises a Delivery Function, DF2, 122 for Intercept Related Information (IRI) reporting and for receiving IRI data via an interface X2 from an Intercepting Control Element, ICE, 120 and a Mediation Function, MF2, 124 of IRI that generates and delivers standardized IRI reports, based on the received IRI over the standardized second interface HI2 to a Law Enforcement Management Function unit to a LEA 180, via an LEMF 112, that may comprise a Collection Functionality, CF. Said IMDU 114 may further comprise a Delivery Function, DF3, 166 for Content of Communications, CC, reporting of received CC via an interface X3 and a Mediation Function, MF3, 168 of CC which generates a CC report, based on the received CC, over a standardized third interface HI3 to the LEA 180, via the LEMF 112, via the CF.

The intercepted packets of the payload related to a target may be labeled in the operator domain by means of a dedicated service identifier. Network operators are provided with the means for the administration of the function, in order to specify the services that are of interest for being classified by the mediation system MF before that the related payload was delivered over HI3.

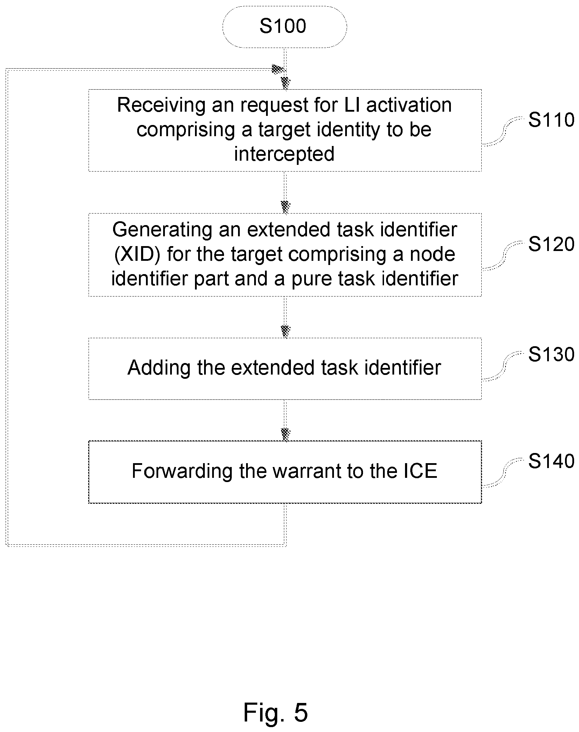

The IMDU 114 comprises a controller, CTRL, 164 for implementing and controlling the operation of the IMDU. Said controller 164 may be implemented by a digital processor or a number of processors, or similar, and computer software. Said processor or processors may be designed and distributed in a number of ways, e.g. one processor serving all different entities or one processor in each entity of the IMDU. Said processor or processors is/are configured to perform a method and embodiments thereof by means of computer program software, wherein said method and embodiments provide the correlation functionality, which method and embodiments thereof are described hereafter with reference to figures 5-9.

Figure 5 is a flowchart of a method S100 performed in the IMDU.

The method enables correlation of data and signaling sent between the Intercept Mediation and Delivery unit, IMDU 114 and an Intercepting Control Element, ICE 120 over the X interfaces, X1_1, X2 and X3. The method is performed by the IMDU 114 of a Lawful Interception, LI, network for providing a Law Enforcement Agency 180 with Intercept Related Information, IRI, and Content of Communications; CC, from data traffic in a digital communications network. Said data traffic is related to one or more target identities and interceptable by means of an Intercepting Control Element, ICE, 120 of said LI network and which ICE is situated or at least connected to a node of the digital communications network. Said ICE node is configured to receive a request to intercept data traffic related to one or more target identities, collect IRI and CC related to said one or more requested target identities, and forward the IRI and CC to the IMDU 114. Said IMDU comprises an Administration mediation function, ADMF, 118 configured to perform the method comprising the steps of:

S110: - Receiving a request for LI activation comprising a target identity to be intercepted;
S120: - Generating an extended task identifier XID for the target comprising a node identifier part and a pure task identifier part;

S130: - Adding the extended task identifier XID to a warrant; and
S140: - Forwarding the warrant to the ICE.

The method S100 is described in more detail with reference to figures 4 and 5.

The LEA 180 sends a request for LI activation comprising a target identity to be intercepted to the Administration Function, ADMF, 118 of the Intercept Mediation and Delivery Unit 114, IMDU. The ADMF 118 is configured to generate an extended task identifier, XID, for the target comprising a node identifier part and a pure task identifier part. The node identifier is an identifier of the Intercepting Control Element, ICE 120 that will receive a task request, i.e. a warrant. The ADMF has a stored list of ICEs and their respective corresponding unique addresses. Thus, to an ICE and its address corresponds a unique node identifier.

At network topology creation and modification, the ADMF function will assign a unique node identifier as an integer in the space of four octets, meaning more than 4 billion nodes can be addressed. For each ICE the originating IP address may be used to retrieve the corresponding node identifier. Said node identifiers are stored in a store identifier list, e.g. see below:

| Network Element | node Identifier |
|---|---|
| MSC Rome | 1 |
| ... | ... |
| MSC Milan | 10 |

At warrant creation, the ADMF function will generate the pure task identifier as an integer in the space of four octets, meaning more than 4 billion warrants can be addressed. The pure task identifier for a given target has a one-to-one relationship to the target identifier. The pure task identifier is an identification number uniquely assigned by ADMF when an interception on a given target (TARGET-A) identity must be activated on an NE (Network Element). Consequently a strict correlation is built between "pure task identifier" and "target identity". An assigned "pure task identifier" value won't be assigned by ADMF to another target (TARGET-B) until the interception on the given target (TARGET-A) is still active.

The pure task identifier is later inserted in the CC packets to be sent on the X3 interface. The pure task identifier value has preferably 4 bytes value format.

The ADMF is configured to get the node identifier from the node list and generate the pure task identifier and combine both the node identifier and pure task identifier together to form the extended task identifier

$$XID = [node\ identifier] - [pure\ task\ identifier]$$

which is sent towards the NE over X1 reference point.

If an X1 XID format is 16 bytes is maintained in X1 messages by the ADMF, the ADMF fills in the least significant 8 bytes with the node identifier, 4 bytes long and the pure task identifier, also 4 bytes long, and the most significant 8 bytes with all zeroes "0".

At ADMF side, the originating IP address may be used to retrieve the corresponding node identifier, which combined with the received pure task identifier will show up the XID value to be used for X1 with X3 correlation purposes.

The ADMF of the IMDU is configured to add, in step S130, the extended task identifier XID to a warrant. Further, the ADMF 118 is further configured to forward the generated warrant to the ICE 120, in accordance with step S140 of the method.

The ICE is configured to store the warrant and the extended target identifier XID = [node identifier] - [pure task identifier]. The ICE 120 is configured to identify the target by means of the pure task identifier and start interception of the targets data communication whenever the target is identified.

The proposed technique consists of building the XID as a structured field consisting of two parameters: node identifier and pure task identifier, unique per ICE.

In the X3 header only the pure task identifier will be sent from the ICE reducing the overhead on the X3 header.

The correlation is assured because the source IP address of the X3 message will allow the identification of the ICE.

In the unlikely event of source IP address ambiguity, leading to the fact that ADMF won't be able to uniquely identify the ICE, the node identifier as sent over X1 might be included as part of the XID transported by the X3 message. Of course, this will worsen the length of the XID, which will anyway be half of the current length as proposed by other solutions.

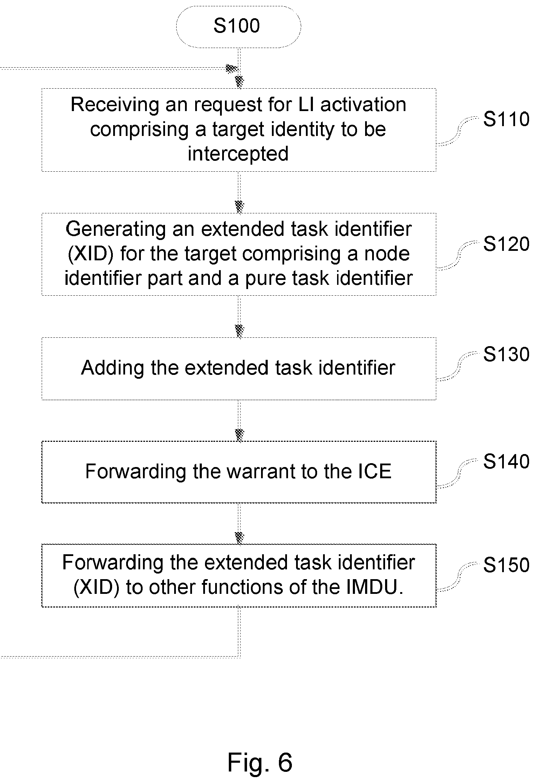

Figure 6 is a flowchart of a first embodiment of the method S100.

As illustrated in figure 6, the method S100 may further involve a step S150:

- Forwarding the extended task identifier XID to other functions of the IMDU. The ADMF has a stored list of ICEs and their respective corresponding unique addresses. The ADMF 118 is further configured to forward the extended task identifier XID and, optionally, together with the unique address corresponding to the ICE node to other functions such as the mediation functions MF2 and MF3 of the IMDU.

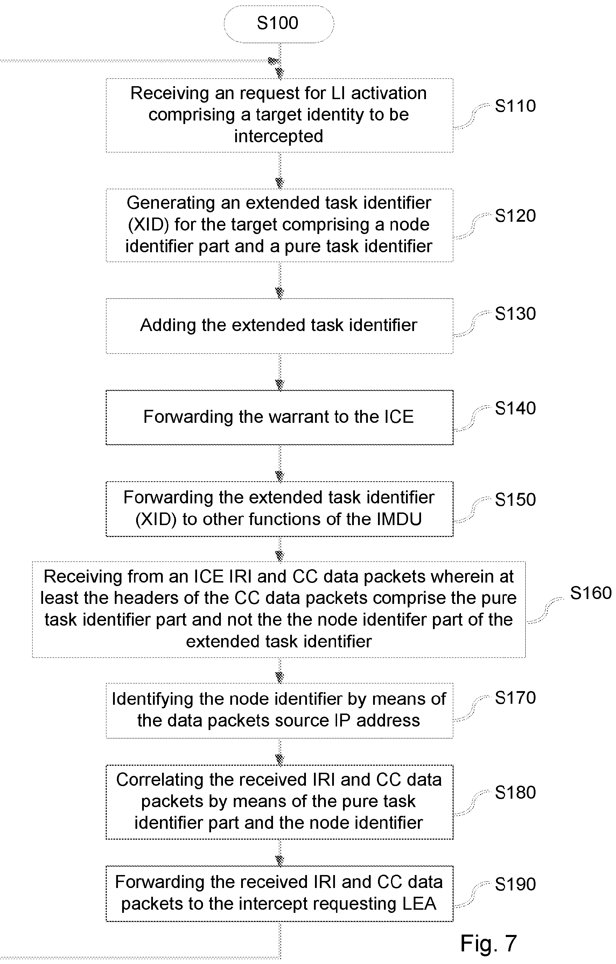

The ADMF is connected to the mediation function MF2 via the interface X1_2 and with MF3 via the interface X1_3, which interfaces enables the ADMF to forward the extended target identifier XID to said mediation functions MF2 and MF3. Said Mediation functions MF2 and MF3 are configured to store the XID identifier and, optionally, with the unique address corresponding to the ICE node to be used for correlating the warrants sent via the X1 interface to the ICE with the IRI and CC data packets sent via the X2 and X3 interfaces to the MF2 and MF3 for correlation purposes, which will now be described with reference to figure 7.

Figure 7 is a flowchart of further one embodiment of the method S100.

As illustrated in figure 7, the method S100 may further involve steps S160, S170, S180 and S190 which hereafter is described in more details. The method S100 further comprises the steps of:

S160: - receiving from an ICE IRI and CC data packets wherein at least the headers of the CC data packets comprise the pure task identifier part and not the node identifier part of the extended task identifier XID;

S170: - identifying the node identifier by means of the data packets source IP address;

S180: - correlating the received IRI and CC data packets by means of the pure task identifier part and the node identifier;

S190: - forwarding the received IRI and CC data packets to the intercept requesting LEA.

The method S100 is hereafter described in more detail with reference to figures 4 and 7.

The LI system comprises interfaces X1_1, X2 and X3 for enabling communication between Intercepting Control Element, ICE 120 and IMDU 114. As described above, IRI data is sent from the ICE to MF2 124 of the IMDU 114 via the interface X2, and CC data is sent from the ICE to MF3 168 of the IMDU 114 via the interface X3. Thus, the IMDU is configured to receive from an ICE IRI and CC data packets wherein at least the headers of the CC data packets comprises the pure task identifier part and not the node identifier part of the extended task identifier XID, according to step S160.

The ICE 120 is configured to insert the pure task identifier part and not the node identifier part of the extended task identifier XID into CC data packets for purpose of limiting the amount of overhead load in the CC data packets sent via the X3 interface. Hence, CC data packets are correlated to the warrant sent via X1.

When CC data packets are received, as in step S160, by the IMDU MF3, the MF3 is configured to identify the node identifier by means of the data packets source IP address, in accordance with step S170. The node identifier is an identifier of the Intercepting Control Element, ICE 120. The MF3 has received the XID identifier and, optionally, the unique address corresponding to the ICE node from the ADMF via the X1_3 interface. Thus, the MF3, and also the MF2, has a stored list of ICEs and their respective corresponding unique address in equivalence with the stored list of the ADMF. For each ICE, the originating IP address, the IP source address in the CC data packets, may be used to retrieve the corresponding node identifier. Generally LEA use both target identity and LI-ID to correlate IRI and CC on HI2 and HI3 interfaces. LI-ID is another identification string (generally a mnemonic string) that is freely chosen by LEA when the interception on a given target is activated. ADMF and MF take the linkage between "target Id" <-> "task identifier"<-> LIID. Thus, when the MF3 has identified the node identifier by means of the data packets source IP address; the MF3 is configured to correlate, step S180 of method S100, by marking the received CC data packets by means of the pure task identifier part and the node identifier in the packet header, and forward the received CC data packets over HI3 to the intercept requesting LEA using the target ID and LI, in accordance with step S190.

The same technique and method steps S160 - S190 may be used for correlating the IRI data packets sent via X2 and signalling to the warrant sent via X1.

A method S200 is provided for enabling correlation and solving the problem of limiting the overhead in the data packets transmitted over the X2 and X3 interface, preferably in the CC data packets transmitted via the X3 interface.

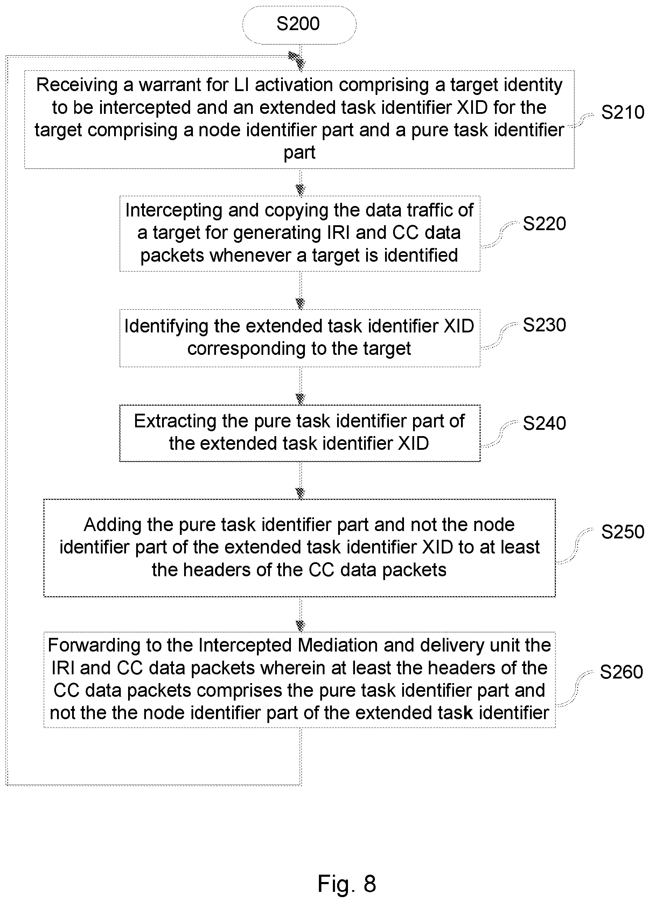

Figure 8 is a flowchart of the method S200 for limiting the overhead.

Said method S200 is performed in an Intercepting Control Element, ICE, 120 of a Lawful Interception, LI, system and network for providing a Law Enforcement Agency 180 with Intercept Related Information, IRI, and Content of Communications, CC, from data traffic in a digital communications network. Said data traffic is related to one or more target identities and interceptable by means of the ICE of said LI network and which ICE is situated in a node of the digital communications network. Said LI network comprises an Intercept Mediation and Delivery unit, IMDU. The method comprises following steps:

> S210: - Receiving warrant for LI activation comprising a target identity to be intercepted and an extended task identifier XID for the target comprising a node identifier part and a pure task identifier part;
> S220: - Intercepting and copying the data traffic of a target for generating IRI and CC data packets whenever a target is identified;
> S230: - Identifying the extended task identifier XID corresponding to the target;
> S240: - Extracting the pure task Identifier part of the extended task identifier XID;
> S250: - Adding the pure task identifier part and not the node identifier part of the extended task identifier XID to at least the headers of the CC data packets;
> S260: - Forwarding to the Intercept Mediation and Delivery unit, IMDU, 114 the IRI data packets and CC data packets wherein at least the headers of the CC data packets comprise the pure task identifier part and not the node identifier part of the extended task identifier.

The method S100 is hereafter described in more detail with reference to figures 4 and 8.

The ICE 120 is configured to receive a warrant for LI activation comprising a target identity to be intercepted and an extended task identifier XID for the target comprising a node identifier part and a pure task identifier part, in accordance with step S210. The warrant is generated by the ADMF of the IMDU and sent over the interface X1_1 to the ICE 120. The ICE is configured to identify the target identity as there is a one-to-one identity with the pure task identifier part. In step S220, the ICE 120 is configured to Intercept and copy the data traffic of a target for generating IRI and CC data packets whenever a target is identified. In the following step, S230, the ICE identifies the extended task identifier XID corresponding to the target identity of the target. The information received in the warrants comprises the pure task identifier and its corresponding target identity. The ICE is configured to extract the pure task Identifier part of the extended task identifier XID as in step S40, and add the pure task identifier part and not the node identifier part of the extended task identifier XID to at least the headers of the CC data packets, and/or IRI signalling and data packets, as stated in step S250. Finally, the ICE is configured to forward to the Intercept Mediation and Delivery unit, IMDU node, 114 the IRI data packets and CC data packets wherein at least the headers of the CC data packets comprises the pure task identifier part and not the node identifier part of the extended task identifier, as stated in step S260. As the headers of the CC data packets comprise the pure task identifier part and not the node identifier part of the extended task identifier the overhead is minimized in the data packets compared to a complete extended task identifier comprising both the node identifier part and the pure task identifier part.

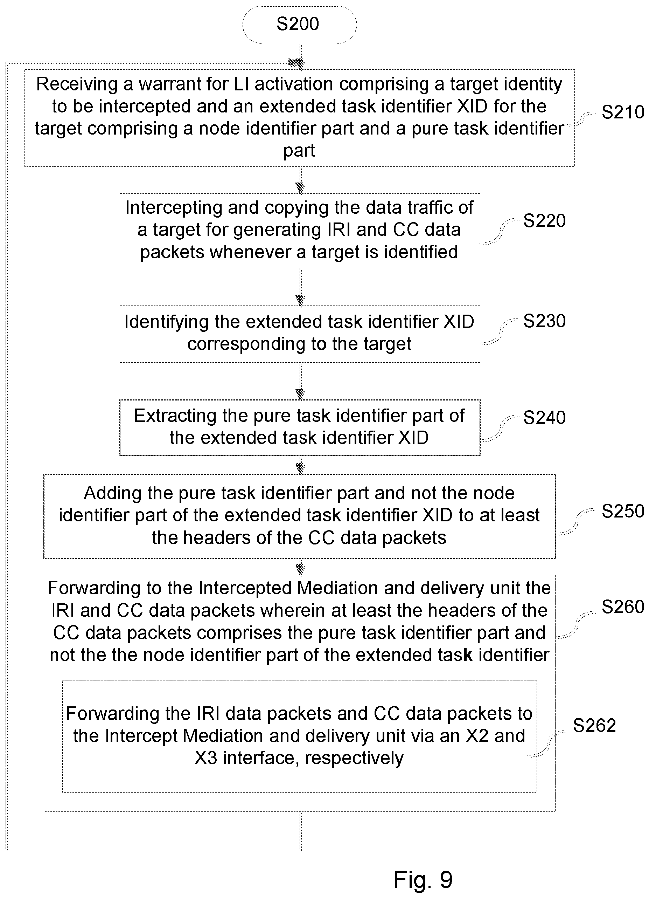

Figure 9 is a flowchart of a first embodiment of the method S200.

As illustrated in figure 9, step S260 of the method S200 may further involve a step S262:

- Forwarding the IRI data packets and CC data packets to the Intercept Mediation and Delivery unit, IMDU via an X2 and X3 interface, respectively. The ICE is configured to deliver the IRI data packets and CC data packets to the Intercept Mediation and Delivery unit, IMDU 114, via an X2 and X3 interface, respectively. In the IMDU the mediation functions MF2 and MF3 are configured to receive the data packets as already described above when describing the method S100.

The above described techniques and methods may be implemented in digital electronically circuitry, or in computer hardware, firmware, software, or in combinations of them. Apparatus of technique and methods may be implemented in a computer program product tangibly embodied in a machine readable storage device for execution by a programmable processor; and method steps may be performed by a programmable processor executing a program of instructions to perform functions of the methods by operating on input data and generating output.

The described methods may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language.

Generally, a processor will receive instructions and data from a read-only memory and/or a random access memory. Storage devices suitable for tangibly embodying computer program instructions and data include all forms of non-volatile memory, including by way of example semiconductor memory devices, such as EPROM (erasable programmable read only memory), EEPROM (electrically erasable programmable read only memory), and flash memory devices; magnetic disks such internal hard disks and removable disks; magneto-optical disks; and CD-ROM (Compact Disc Read-Only Memory) disks. Any of the foregoing may be supplemented by, or incorporated in, specially -designed ASICs (Application Specific Integrated Circuits).

As already described above with reference to figure 4, the IMDU 114 comprises a controller, CTRL, 164 for implementing and controlling the operation of the IMDU. Said controller 164 may be implemented by a digital programmable processor unit or a number of processors, or similar, and computer software. The IMDU 114 is placed in a node of a LI network. Said controller is configured to receive a request to intercept data traffic related to one or more target identities, collect IRI and CC related to said one or more requested target identities, and forward the IRI and CC to the Intercept Mediation and Delivery, IMDU, comprising a programmable processing unit configured for implementing an Administration mediation function, ADMF, and configured for receiving a request for LI activation comprising a target identity to be intercepted, generating an extended task identifier XID for the target comprising a node identifier part and a pure task identifier part, adding the extended task identifier XID to a warrant and forwarding the warrant to the ICE.

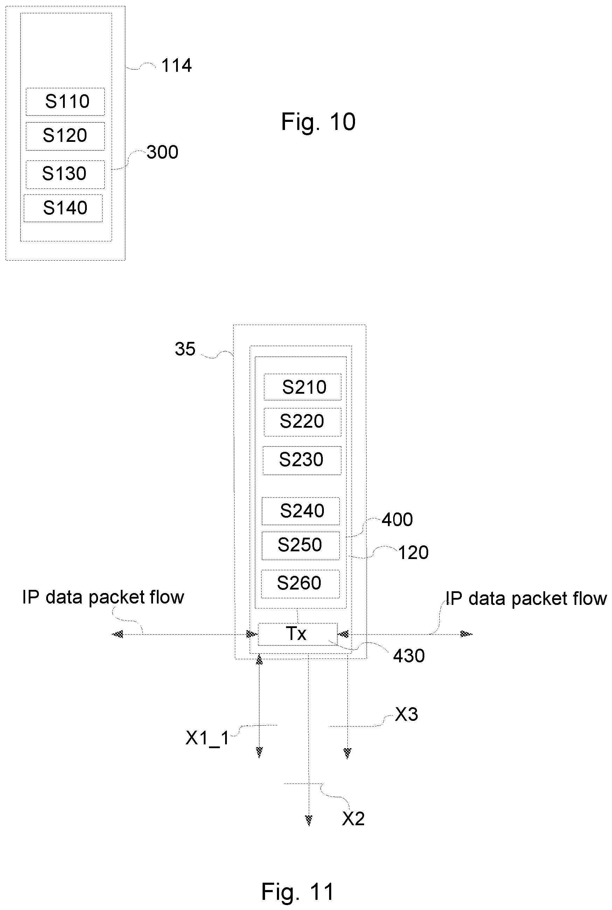

Figure 10 is a block diagram of another embodiment of the IMDU configured to perform the method S100.

The IMDU 114 is implemented as a processing means 300 comprising digital programmable processor unit or a number of processors, or similar, and computer software. The IMDU 114 is placed in a node of a LI network. Said processing means 300 is configured to receive a request to intercept data traffic related to one or more target identities, collect IRI and CC related to said one or more requested target identities, and forward the IRI and CC to the Intercept Mediation and Delivery, IMDU, comprising processing means 300 configured for implementing an Administration mediation function, ADMF, which is configured for receiving, S110, a request for LI activation comprising a target identity to be intercepted, generating, S120, an extended task identifier XID for the target comprising a node identifier part and a pure task identifier part, adding, S130, the extended task identifier XID to a warrant and forwarding, S140, the warrant to the ICE. The processing means 300 implementing the IMDU is further configured to implement the Mediation and Delivery functions, which are configured for receiving, S160, from an ICE IRI and CC data packets wherein at least the headers of the CC data packets comprise the pure task identifier part and not the node identifier part of the extended task identifierXID, identifying, S170, the node identifier by means of the data packets source IP address, correlating, S180, the received IRI and CC data packets by means of the pure task identifier part and the node identifier, and forwarding, S190, the received IRI and CC data packets to the intercept requesting LEA.

Figure 11 is a block diagram of an ICE for performing the method S200.

The Lawful Interception, LI, network comprises at least one ICE 120 for providing a Law Enforcement Agency with Intercept Related Information, IRI, and Content of Communications, CC, from data traffic in a digital communications network, which comprise a node 35 wherein the ICE is situated. Said data traffic is related to one or more target identities and interceptable by means of said ICE in the node of the digital communications network. Said LI network further comprises an Intercept Mediation and Delivery unit, IMDU.

The ICE 120 comprises processing means 400 comprising digital programmable processor unit or a number of processors, or similar, and computer software.

Said ICE comprises processing means 400 configured for receiving, S210, a warrant for LI activation comprising a target identity to be intercepted and an extended task identifier XID for the target comprising a node identifier part and a pure task identifier part, intercepting and copying, S220, the data traffic of a target for generating IRI and CC data packets whenever a target is identified, identifying, S230, the extended task identifier XID corresponding to the target, extracting, S240, the pure task identifier part of the extended task identifier XID, adding, S250, the pure task identifier part and not the node identifier part of the extended task identifier XID to at least the headers of the CC data packets, and forwarding, to the Intercept Mediation and Delivery unit, IMDU, the IRI data packets and CC data packets wherein at least the headers of the CC data packets comprise the pure task identifier part and not the node identifier part of the extended task identifier.

A computer program product comprising computer program code loadable into a processor, wherein the computer program comprises code adapted to perform of one or more of the steps of the methods and there embodiments described herein, when the computer program code is executed by the processor. A computer program product can also be implemented as a computer program and a computer readable means on which the computer program is stored.

A number of embodiments of the present technique have been described. It will be understood that various modifications may be made without departing from the scope of the technique. Therefore, other implementations are within the scope of the following claims.

**References**

[1] 3GPP TS 33.106 "Lawful Interception requirements (Release 8)";

[2] 3GPP TS 33.107 "Lawful interception architecture and functions (Release 8)";

[3] 3GPP TS 33.108 "Handover interface for Lawful Interception" (Release 8).

## EP 3 854 121 B1

### References

[1] 3GPP TS 33.106 "Lawful Interception requirements (Release 8)";

[2] 3GPP TS 33.107 "Lawful interception architecture and functions (Release 8)";

[3] 3GPP TS 33.108 "Handover interface for Lawful Interception" (Release 8);

### Claims

1. A method in an Intercept Mediation and Delivery unit, IMDU (114), of a Lawful Interception, LI, network for providing a Law Enforcement Agency, LEA, (180) with Intercept Related Information, IRI, and Content of Communications; CC, from data traffic in a digital communications network, said data traffic being related to one or more target identities and interceptable by means of an Intercepting Control Element, ICE, (120) of said LI network and which ICE being situated in a node (35) of the digital communications network, said ICE being configured to receive a request to intercept data traffic related to one or more target identities, collect IRI and CC related to said one or more requested target identities, and forward the IRI and CC to the IMDU (114) comprising an Administration mediation function, ADMF, (118) which performs:

   - receiving (S110) a request for LI activation comprising a target identity to be intercepted;
   - generating (S120) an extended task identifier XID for the target identity, said extended task identifier XID comprising a node identifier part which identifies the ICE (120) and a pure task identifier part which is an identification number assigned by the ADMF (118) for the target identity;
   - adding (S130) the extended task identifier XID to a warrant;
   - forwarding (S140) the warrant to the ICE (120);
   - receiving ( S160), from the ICE (120), IRI and CC data packets wherein at least the headers of the CC data packets comprise the pure task identifier part and not the node identifier part of the extended task identifier XID;
   - identifying (S170) the node identifier by means of the data packets source IP address;
   - correlating (S180) the received IRI and CC data packets by means of the pure task identifier part and the node identifier; and
   - forwarding (S190) the received IRI and CC data packets to the intercept requesting LEA (180).

2. A method (S200) of an Intercepting Control Element, ICE (120), of a node of a Lawful Interception, LI, network for providing a Law Enforcement Agency (180) with Intercept Related Information, IRI, and Content of Communications, CC, from data traffic in a digital communications network, said data traffic being related to one or more target identities and interceptable by means of the ICE and which ICE being situated in the digital communications network, said LI network comprising an Intercept Mediation and Delivery unit, IMDU (114), and said method (S200) comprising:

   - receiving (S210) a warrant for LI activation comprising a target identity to be intercepted and an extended task identifier XID for the target identity, said extended task identifier XID comprising a node identifier part which identifies the ICE (120) and a pure task identifier part which is an identification number assigned by the ADMF (118) for the target identity;
   - intercepting (S220) and copying the data traffic of a target for generating IRI and CC data packets whenever a target is identified;
   - identifying (S230) the extended task identifier XID corresponding to the target;
   - extracting (S240) the pure task identifier part of the extended task identifier XID;
   - adding (S250) the pure task identifier part and not the node identifier part of the extended task identifier XID to at least the headers of the CC data packets;
   - forwarding (S260) to the Intercept Mediation and Delivery unit, IMDU (114), the IRI data packets and CC data packets wherein at least the headers of the CC data packets comprise the pure task identifier part and not the node identifier part of the extended task identifier.

3. The method according to claim 2, wherein the method further comprises :

   - forwarding (S262) the IRI data packets and CC data packets to the Intercept Mediation and Delivery unit, IMDU (114), via an X2 and X3 interface, respectively.

4. The method according to claim 2 or 3, wherein the extended task identifier is 16 bytes long, of which the least significant 8 bytes are reserved for the node identifier and pure task identifier and the most significant 8 bytes with zeroes ("0").

5. The method according to any of claims 2-4, wherein the node identifier is an integer assigned to the node by the ADMF of the IMDU during creation or modification of the LI network topology.

6. An Intercept Mediation and Delivery unit, IMDU (114), of a Lawful Interception, LI, network for providing a Law Enforcement Agency, LEA (180) with Intercept Related Information, IRI, and Content of Communications; CC, from data traffic in a digital communications network, said data traffic being related to one or more target identities and interceptable by means of an Intercepting Control Element, ICE, (120) of said LI network and which ICE (120) is situated in a node (35) of the digital communications network, said ICE (120) being configured to receive a request to intercept data traffic related to one or more target identities, collect IRI and CC related to said one or more requested target identities, and forward the IRI and CC to the IMDU (114) comprising a programmable processing unit configured for implementing an Administration mediation function, ADMF, (118) and configured to receive a request for LI activation comprising a target identity to be intercepted, generate an extended task identifier XID for the target identity, said extended task identifier XID comprising a node identifier part which identifies the ICE (120) and a pure task identifier part which is an identification number assigned by the ADMF (118) for the target identity, add the extended task identifier XID to a warrant and forwarding the warrant to the ICE (120), receive from the ICE (120) IRI and CC data packets wherein at least the headers of the CC data packets comprise the pure task identifier part and not the node identifier part of the extended task identifier XID, identify the node identifier by means of the data packets source IP address, correlate the received IRI and CC data packets by means of the pure task identifier part and the node identifier, and forward the received IRI and CC data packets to the intercept requesting LEA (180).

7. The IMDU (114) according to claim 6, wherein the programmable processing unit further is configured to forward the extended task identifier XID to other functions of the IMDU.

8. The IMDU (114) according to claim 6 or 7,wherein the extended task identifier is 16 bytes long, of which the least significant 8 bytes are reserved for the node identifier and pure task identifier and the most significant 8 bytes with zeroes ("0").

9. The IMDU (114) according to any of claims 6-8, wherein the node identifier is an integer assigned to the node by the ADMF during creation or modification of the LI network topology.

10. An Intercepting Control Element, ICE (120), of a Lawful Interception, LI, network for providing a Law Enforcement Agency (180) with Intercept Related Information, IRI, and Content of Communications; CC, from data traffic in a digital communications network, said data traffic being related to one or more target identities and interceptable by means of in the node of said LI network and digital communications network, said LI network comprising an Intercept Mediation and Delivery unit, IMDU (114), said ICE node comprising a programmable processing unit configured to receive a warrant for LI activation comprising a target identity to be intercepted and an extended task identifier XID for the target identity, said extended task identifier XID comprising a node identifier part which identifies the ICE (120) and a pure task identifier part which is an identification number assigned by the ADMF (118) for the target identity;, intercept and copy the data traffic of a target for generating IRI and CC data packets whenever a target is identified, identify the extended task identifier XID corresponding to the target, extract the pure task identifier part of the extended task identifier XID, add the pure task identifier part and not the node identifier part of the extended task identifier XID to at least the headers of the CC data packets, and forward to the IMDU, the IRI data packets and CC data packets wherein at least the headers of the CC data packets comprise the pure task identifier part and not the node identifier part of the extended task identifier.

11. The ICE (120) according to claim 10, wherein the programmable processing unit further is configured to forward the IRI data packets and CC data packets to the Intercept Mediation and Delivery unit, IMDU (114), via an X2 and X3 interface, respectively.

12. The ICE (120) according to claim 10 or 11, wherein the extended task identifier is 16 bytes long, of which the least significant 8 bytes are reserved for the node identifier and pure task identifier and the most significant 8 bytes with zeroes ("0").

**13.** The ICE (120) according to any of claims 10 - 12, wherein the node identifier is an integer assigned to the node by the ADMF of the IMDU during creation or modification of the LI network topology.

**14.** A computer program product comprising computer program code loadable into processing means (300) of an Intercept Mediation and Delivery unit, IMDU (114), wherein the computer program comprises code adapted to perform the method of claim 1, when the computer program code is executed in the processing means.

**15.** A computer program product comprising computer program code loadable into a processing means (400) of an Intercepting Control Element, ICE (120), wherein the computer program comprises code adapted to perform the method of one or more of the claims 2-5, when the computer program code is executed in the processing means.

**Patentansprüche**

**1.** Verfahren in einer Intercept-Mediation-and-Delivery-Einheit, IMDU, (114) eines Netzwerks für legales Abhören, LI, zum Versehen einer Strafverfolgungsbehörde, LEA, (180) mit abhörbezogenen Informationen, IRI, und Kommunikationsinhalten, CC, aus Datenverkehr in einem digitalen Kommunikationsnetzwerk, wobei der Datenverkehr mit einer oder mehreren Zielidentitäten in Beziehung steht und mithilfe eines Abhörkontrollelements, ICE, (120) des LI-Netzwerks abgehört werden kann, wobei sich das ICE in einem Knoten (35) des digitalen Kommunikationsnetzwerk befindet, das ICE zum Empfangen einer Anforderung zum Abhören von Datenverkehr in Bezug auf eine oder mehrere Zielidentitäten, Sammeln von IRI und CC in Bezug auf die eine oder die mehreren angeforderten Zielidentitäten und Weiterleiten der IRI und CC an die IMDU (114) konfiguriert ist, die eine Verwaltungsvermittlungsfunktion, ADMF, (118) umfasst, die Folgendes durchführt:

- Empfangen (S110) einer Anforderung zur LI-Aktivierung, die eine abzuhörende Zielidentität umfasst;
- Erzeugen (S120) einer erweiterten Aufgabenkennung XID für die Zielidentität, wobei die erweiterte Aufgabenkennung XID einen Knotenkennungsteil, der das ICE (120) identifiziert, und einen reinen Aufgabenkennungsteil umfasst, der eine Identifikationsnummer ist, die der Zielidentität von der ADMF (118) zugeordnet wird;
- Hinzufügen (S130) der erweiterten Aufgabenkennung XID zu einem Vollstreckungsbefehl;
- Weiterleiten (S140) des Vollstreckungsbefehls an das ICE (120);
- Empfangen (S160) von IRI- und CC-Datenpaketen vom ICE (120), wobei zumindest die Header der CC-Datenpakete den reinen Aufgabenkennungsteil, aber nicht den Knotenkennungsteil der erweiterten Aufgabenkennung XID umfassen;
- Identifizieren (S170) der Knotenkennung mithilfe der Quell-IP-Adresse der Datenpakete;
- Korrelieren (S180) der empfangenen IRI- und CC-Datenpakete mithilfe des reinen Aufgabenkennungsteils und der Knotenkennung; und
- Weiterleiten (S190) der empfangenen IRI- und CC-Datenpakete an die das Abhören anfordernde LEA (180) .

**2.** Verfahren (S200) eines Abhörkontrollelements, ICE, (120) eines Knotens eines Netzwerks für legales Abhören, LI, zum Versehen einer Strafverfolgungsbehörde, LEA, (180) mit abhörbezogenen Informationen, IRI, und Kommunikationsinhalten, CC, aus Datenverkehr in einem digitalen Kommunikationsnetzwerk, wobei der Datenverkehr mit einer oder mehreren Zielidentitäten in Beziehung steht und mithilfe des ICE abgehört werden kann, wobei sich das ICE im digitalen Kommunikationsnetzwerk befindet, wobei das LI-Netzwerk eine Intercept-Mediation-and-Delivery-Einheit, IMDU, (114) umfasst und das Verfahren (S200) umfasst:

- Empfangen (S210) eines Vollstreckungsbefehls zur LI-Aktivierung, der eine abzuhörende Zielidentität und eine erweiterte Aufgabenkennung XID für die Zielidentität umfasst, wobei die erweiterte Aufgabenkennung XID einen Knotenkennungsteil, der das ICE (120) identifiziert, und einen reinen Aufgabenkennungsteil umfasst, der eine Identifikationsnummer ist, die der Zielidentität von der ADMF (118) zugeordnet wird;
- Abhören (S220) und Kopieren des Datenverkehrs eines Ziels, um IRI- und CC-Datenpakete zu erzeugen, wann immer ein Ziel identifiziert wird;
- Identifizieren (S230) der erweiterten Aufgabenkennung XID, die dem Ziel entspricht;
- Extrahieren (S240) des reinen Aufgabenkennungsteils der erweiterten Aufgabenkennung XID;
- Hinzufügen (S250) des reinen Aufgabenkennungsteils, aber nicht des Knotenkennungsteils der erweiterten Aufgabenkennung XID zumindest zu den Headern der CC-Datenpakete;
- Weiterleiten (S260) der IRI-Datenpakete und der CC-Datenpakete an die Intercept-Mediation-and-Delivery-Einheit, IMDU, (114), wobei zumindest die Header der CC-Datenpakete den reinen Aufgabenkennungsteil, aber nicht den Knotenkennungsteil der erweiterten Aufgabenkennung XID umfassen.

3. Verfahren nach Anspruch 2, wobei das Verfahren ferner umfasst:

   - Weiterleiten (S262) der IRI-Datenpakete und der CC-Datenpakete an die Intercept-Mediation-and-Delivery-Einheit, IMDU, (114) über eine X2- bzw. X3-Schnittstelle.

4. Verfahren nach Anspruch 2 oder 3, wobei die erweiterte Aufgabenkennung 16 Bytes lang ist, wovon die niedrigstwertigen 8 Bytes für die Knotenkennung und die reine Aufgabenkennung reserviert und die höchstwertigen 8 Bytes mit Nullen ("0") sind.

5. Verfahren nach einem der Ansprüche 2 bis 4, wobei die Knotenkennung eine ganze Zahl ist, die dem Knoten von der ADMF der IMDU während der Erstellung oder Modifikation der LI-Netzwerktopologie zugeordnet wird.

6. Intercept-Mediation-and-Delivery-Einheit, IMDU, (114) eines Netzwerks für legales Abhören, LI, zum Versehen einer Strafverfolgungsbehörde, LEA, (180) mit abhörbezogenen Informationen, IRI, und Kommunikationsinhalten, CC, aus Datenverkehr in einem digitalen Kommunikationsnetzwerk, wobei der Datenverkehr mit einer oder mehreren Zielidentitäten in Beziehung steht und mithilfe eines Abhörkontrollelements, ICE, (120) des LI-Netzwerks abgehört werden kann, wobei sich das ICE in einem Knoten (35) des digitalen Kommunikationsnetzwerk befindet, das ICE (120) zum Empfangen einer Anforderung zum Abhören von Datenverkehr in Bezug auf eine oder mehrere Zielidentitäten, Sammeln von IRI und CC in Bezug auf die eine oder die mehreren angeforderten Zielidentitäten und Weiterleiten der IRI und CC an die IMDU (114) konfiguriert ist, die eine programmierbare Verarbeitungseinheit umfasst, die zum Implementieren einer Verwaltungsvermittlungsfunktion, ADMF, (118) konfiguriert ist und konfiguriert ist zum Empfangen einer Anforderung zur LI-Aktivierung, die eine abzuhörende Zielidentität umfasst, Erzeugen einer erweiterten Aufgabenkennung XID für die Zielidentität, wobei die erweiterte Aufgabenkennung XID einen Knotenkennungsteil, der das ICE (120) identifiziert, und einen reinen Aufgabenkennungsteil umfasst, der eine Identifikationsnummer ist, die der Zielidentität von der ADMF (118) zugeordnet wird, Hinzufügen der erweiterten Aufgabenkennung XID zu einem Vollstreckungsbefehl und Weiterleiten des Vollstreckungsbefehls an das ICE (120), Empfangen von IRI- und CC-Datenpaketen vom ICE (120), wobei zumindest die Header der CC-Datenpakete den reinen Aufgabenkennungsteil, aber nicht den Knotenkennungsteil der erweiterten Aufgabenkennung XID umfassen, Identifizieren der Knotenkennung mithilfe der Quell-IP-Adresse der Datenpakete, Korrelieren der empfangenen IRI- und CC-Datenpakete mithilfe des reinen Aufgabenkennungsteils und der Knotenkennung und Weiterleiten der empfangenen IRI- und CC-Datenpakete an die das Abhören anfordernde LEA (180).

7. IMDU (114) nach Anspruch 6, wobei die programmierbare Verarbeitungseinheit ferner zum Weiterleiten der erweiterten Aufgabenkennung XID an andere Funktionen der IMDU konfiguriert ist.

8. IMDU (114) nach Anspruch 6 oder 7, wobei die erweiterte Aufgabenkennung 16 Bytes lang ist, wovon die niedrigstwertigen 8 Bytes für die Knotenkennung und die reine Aufgabenkennung reserviert und die höchstwertigen 8 Bytes mit Nullen ("0") sind.

9. IMDU (114) nach einem der Ansprüche 6 bis 8, wobei die Knotenkennung eine ganze Zahl ist, die dem Knoten von der ADMF während der Erstellung oder Modifikation der LI-Netzwerktopologie zugeordnet wird.

10. Abhörkontrollelement, ICE (120) eines Netzwerks für legales Abhören, LI, zum Versehen einer Strafverfolgungsbehörde, LEA, (180) mit abhörbezogenen Informationen, IRI, und Kommunikationsinhalten, CC, aus Datenverkehr in einem digitalen Kommunikationsnetzwerk, wobei der Datenverkehr mit einer oder mehreren Zielidentitäten in Beziehung steht und im Knoten des LI-Netzwerks und des digitalen Kommunikationsnetzwerks abgehört werden kann, wobei das LI-Netzwerk eine Intercept-Mediation-and-Delivery-Einheit, IMDU, (114) umfasst, wobei der ICE-Knoten eine programmierbare Verarbeitungseinheit umfasst, die konfiguriert ist zum Empfangen eines Vollstreckungsbefehls zur LI-Aktivierung, der eine abzuhörende Zielidentität und eine erweiterte Aufgabenkennung XID für die Zielidentität umfasst, wobei die erweiterte Aufgabenkennung XID einen Knotenkennungsteil, der das ICE (120) identifiziert, und einen reinen Aufgabenkennungsteil umfasst, der eine Identifikationsnummer ist, die der Zielidentität von der ADMF (118) zugeordnet wird, Abhören und Kopieren des Datenverkehrs eines Ziels, um IRI- und CC-Datenpakete zu erzeugen, wann immer ein Ziel identifiziert wird, Identifizieren der erweiterten Aufgabenkennung XID, die dem Ziel entspricht, Extrahieren des reinen Aufgabenkennungsteils der erweiterten Aufgabenkennung XID, Hinzufügen des reinen Aufgabenkennungsteils, aber nicht des Knotenkennungsteils der erweiterten Aufgabenkennung XID zumindest zu den Headern der CC-Datenpakete und Weiterleiten der IRI-Datenpakete und CC-Datenpakete an die IMDU, wobei zumindest die Header der CC-Datenpakete den reinen Aufgabenkennungsteil, aber nicht den Knotenkennungsteil der erweiterten Aufgabenkennung XID umfassen.

**11.** ICE (120) nach Anspruch 10, wobei die programmierbare Verarbeitungseinheit ferner so konfiguriert ist, dass sie die IRI-Datenpakete und die CC-Datenpakete über eine X2- bzw. X3-Schnittstelle an die Intercept-Mediation-and-Delivery-Einheit, IMDU, (114) weiterleitet.

**12.** ICE (120) nach Anspruch 10 oder 11, wobei die erweiterte Aufgabenkennung 16 Bytes lang ist, wovon die niedrigstwertigen 8 Bytes für die Knotenkennung und die reine Aufgabenkennung reserviert und die höchstwertigen 8 Bytes mit Nullen ("0") sind.

**13.** ICE (120) nach einem der Ansprüche 10 bis 12, wobei die Knotenkennung eine ganze Zahl ist, die dem Knoten von der ADMF der IMDU während der Erstellung oder Modifikation der LI-Netzwerktopologie zugeordnet wird.

**14.** Computerprogrammprodukt, umfassend Computerprogrammcode, der in Verarbeitungsmittel (300) einer Intercept-Mediation-and-Delivery-Einheit, IMDU, (114) geladen werden kann, wobei der Computerprogrammcode so ausgelegt ist, dass er das Verfahren nach Anspruch 1 durchführt, wenn der Computerprogrammcode in den Verarbeitungsmitteln ausgeführt wird.

**15.** Computerprogrammprodukt, umfassend Computerprogrammcode, der in ein Verarbeitungsmittel (400) einer Abhörkontrollelements, ICE, (120) geladen werden kann, wobei der Computerprogrammcode so ausgelegt ist, dass er das Verfahren nach einem der Ansprüche 2 bis 5 durchführt, wenn der Computerprogrammcode in dem Verarbeitungsmittel ausgeführt wird.

**Revendications**

**1.** Procédé dans une unité de distribution et de médiation d'interception, IMDU (114), d'un réseau d'interception légale, LI, pour fournir à un organisme d'application de la loi, LEA, (180) des informations liées à une interception, IRI, et un contenu de communication, CC, à partir d'un trafic de données dans un réseau de communication numérique, ledit trafic de données étant lié à une ou plusieurs identités cible et pouvant être intercepté au moyen d'un élément de commande d'interception, ICE, (120) dudit réseau LI et ledit ICE étant situé dans un noeud (35) du réseau de communication numérique, ledit ICE étant configuré pour recevoir une demande d'interception de trafic de données lié à une ou plusieurs identités cible, collecter des IRI et un CC liés auxdites une ou plusieurs identités cible demandées, et transférer les IRI et le CC à l'IMDU (114) comprenant une fonction de médiation d'administration, ADMF, (118) qui réalise :

- la réception (S110) d'une demande d'activation de LI comprenant une identité cible à intercepter ;
- la génération (S120) d'un identifiant de tâche étendu XID pour l'identité cible, ledit identifiant de tâche étendu XID comprenant une partie d'identifiant de noeud qui identifie l'ICE (120) et une partie d'identifiant de tâche pur qui est un numéro d'identification attribué par l'ADMF (118) pour l'identité cible ;
- l'ajout (S130) de l'identifiant de tâche étendu XID à un mandat ;
- le transfert (S140) du mandat à l'ICE (120) ;
- la réception (S160), depuis l'ICE (120), des paquets de données d'IRI et de CC, dans lequel au moins les en-têtes des paquets de données de CC comprennent la partie d'identifiant de tâche pur mais pas la partie d'identifiant de noeud de l'identifiant de tâche étendu XID ;
- l'identification (S170) de l'identifiant de noeud au moyen de l'adresse IP source de paquets de données ;
- la corrélation (S180) des paquets de données d'IRI et de CC reçus au moyen de la partie d'identifiant de tâche pur et de l'identifiant de noeud ; et
- le transfert (S190) des paquets de données d'IRI et de CC reçus au LEA demandeur d'interception (180) .

**2.** Procédé (S200) d'un élément de commande d'interception, ICE (120), d'un noeud d'un réseau d'interception légale, LI, pour fournir, à un organisme d'application de la loi (180), des informations liées à une interception, IRI, et un contenu de communication, CC, à partir d'un trafic de données dans un réseau de communication numérique, ledit trafic de données étant lié à une ou plusieurs identités cible et pouvant être intercepté au moyen de l'ICE et ledit ICE étant situé dans le réseau de communication numérique, ledit réseau LI comprenant une unité de distribution et de médiation d'interception, IMDU (114), et ledit procédé (S200) comprenant :

- la réception (S210) d'un mandat d'activation de LI comprenant une identité cible à intercepter et un identifiant de tâche étendu XID pour l'identité cible, ledit identifiant de tâche étendu XID comprenant une partie d'identifiant de noeud qui identifie l'ICE (120) et une partie d'identifiant de tâche pur qui est un numéro d'identification attribué par l'ADMF (118) pour l'identité cible ;

- l'interception (S220) et la copie du trafic de données d'une cible pour la génération de paquets de données d'IRI et de CC lorsqu'une cible est identifiée ;
- l'identification (S230) de l'identifiant de tâche étendu XID correspondant à la cible ;
- l'extraction (S240) de la partie d'identifiant de tâche pur de l'identifiant de tâche étendu XID ;
- l'ajout (S250) de la partie d'identifiant de tâche pur mais pas la partie d'identifiant de noeud de l'identifiant de tâche étendu XID au moins aux en-têtes des paquets de données de CC ;
- le transfert (S260), à l'unité de distribution et de médiation d'interception, IMDU (114), des paquets de données d'IRI et des paquets de données de CC, dans lequel au moins les en-têtes des paquets de données de CC comprennent la partie d'identifiant de tâche pur mais pas la partie d'identifiant de noeud de l'identifiant de tâche étendu.

3.  Procédé selon la revendication 2, dans lequel le procédé comprend en outre :

    - le transfert (S262), à l'unité de distribution et de médiation d'interception, IMDU (114), des paquets de données d'IRI et des paquets de données de CC via respectivement des interfaces X2 et X3.

4.  Procédé selon la revendication 2 ou 3, dans lequel l'identifiant de tâche étendu présente une longueur de 16 octets, dont les 8 octets de poids faible sont réservés pour l'identifiant de noeud et l'identifiant de tâche pur et les 8 octets de poids fort sont des zéros (« 0 ») .

5.  Procédé selon l'une quelconque des revendications 2 à 4, dans lequel l'identifiant de noeud est un entier attribué au noeud par l'ADMF de l'IMDU au cours d'une création ou d'une modification de la topologie de réseau LI.

6.  Unité de distribution et de médiation d'interception, IMDU (114), d'un réseau d'interception légale, LI, pour fournir, à un organisme d'application de la loi, LEA, (180), des informations liées à une interception, IRI, et un contenu de communication, CC, à partir d'un trafic de données dans un réseau de communication numérique, ledit trafic de données étant lié à une ou plusieurs identités cible et pouvant être intercepté au moyen d'un élément de commande d'interception, ICE, (120) dudit réseau LI et ledit ICE (120) est situé dans un noeud (35) du réseau de communication numérique, ledit ICE (120) étant configuré pour recevoir une demande d'interception de trafic de données lié à une ou plusieurs identités cible, collecter des IRI et un CC liés auxdites une ou plusieurs identités cible demandées, et transférer les IRI et le CC à l'IMDU (114) comprenant une unité de traitement programmable configurée pour mettre en œuvre une fonction de médiation d'administration, ADMF, (118) et configurée pour recevoir une demande d'activation de LI comprenant une identité cible à intercepter, générer un identifiant de tâche étendu XID pour l'identité cible, ledit identifiant de tâche étendu XID comprenant une partie d'identifiant de noeud qui identifie l'ICE (120) et une partie d'identifiant de tâche pur qui est un numéro d'identification attribué par l'ADMF (118) pour l'identité cible, ajouter l'identifiant de tâche étendu XID à un mandat et transférer le mandat à l'ICE (120), recevoir, depuis l'ICE (120), des paquets de données d'IRI et de CC, dans laquelle au moins les en-têtes des paquets de données de CC comprennent la partie d'identifiant de tâche pur mais pas la partie d'identifiant de noeud de l'identifiant de tâche étendu XID, identifier l'identifiant de noeud au moyen de l'adresse IP source de paquets de données, corréler les paquets de données d'IRI et de CC reçus au moyen de la partie d'identifiant de tâche pur et de l'identifiant de noeud, et transférer les paquets de données d'IRI et de CC reçus au LEA demandeur d'interception (180).

7.  IMDU (114) selon la revendication 6, dans laquelle l'unité de traitement programmable est en outre configurée pour transférer l'identifiant de tâche étendu XID à d'autres fonctions de l'IMDU.

8.  IMDU (114) selon la revendication 6 ou 7, dans laquelle l'identifiant de tâche étendu présente une longueur de 16 octets, dont les 8 octets de poids faible sont réservés pour l'identifiant de noeud et l'identifiant de tâche pur et les 8 octets de poids fort sont des zéros (« 0 ») .

9.  IMDU (114) selon l'une quelconque des revendications 6 à 8, dans laquelle l'identifiant de noeud est un entier attribué au noeud par l'ADMF au cours d'une création ou d'une modification de la topologie de réseau LI.

10. Elément de commande d'interception, ICE (120), d'un réseau d'interception légale, LI, pour fournir, à un organisme d'application de la loi (180), des informations liées à une interception, IRI, et un contenu de communication, CC, à partir d'un trafic de données dans un réseau de communication numérique, ledit trafic de données étant lié à une ou plusieurs identités cible et pouvant être intercepté par des moyens dans le noeud dudit réseau LI et dudit réseau de communication numérique, ledit réseau LI comprenant une unité de distribution et de médiation d'interception, IMDU (114), ledit noeud ICE comprenant une unité de traitement programmable configurée pour recevoir un mandat d'activation de LI comprenant une identité cible à intercepter et un identifiant de tâche étendu XID pour l'identité cible, ledit identifiant de tâche étendu XID comprenant une partie d'identifiant de noeud qui identifie l'ICE (120) et une partie d'identifiant de tâche pur qui est un numéro d'identification attribué par l'ADMF (118) pour l'identité cible, intercepter et copier le trafic de données d'une cible pour la génération de paquets de données d'IRI et de CC lorsqu'une cible est identifiée, identifier l'identifiant de tâche étendu XID correspondant à la cible, extraire la partie d'identifiant de tâche pur de l'identifiant de tâche étendu XID, ajouter la partie d'identifiant de tâche pur mais pas la partie d'identifiant de noeud de l'identifiant de tâche étendu XID au moins aux en-têtes des paquets de données de CC, et transférer, à l'IMDU, les paquets de données d'IRI et les paquets de données de CC, dans lequel au moins les en-têtes des paquets de données de CC comprennent la partie d'identifiant de tâche pur mais pas la partie d'identifiant de noeud de l'identifiant de tâche étendu.

11. ICE (120) selon la revendication 10, dans lequel l'unité de traitement programmable est en outre configurée pour transférer, à l'unité de distribution et de médiation d'interception, IMDU (114), des paquets de données d'IRI et des paquets de données de CC via respectivement des interfaces X2 et X3.

12. ICE (120) selon la revendication 10 ou 11, dans lequel l'identifiant de tâche étendu présente une longueur de 16 octets, dont les 8 octets de poids faible sont réservés pour l'identifiant de noeud et l'identifiant de tâche pur et les 8 octets de poids fort sont des zéros (« 0 »).

13. ICE (120) selon l'une quelconque des revendications 10 à 12, dans lequel l'identifiant de noeud est un entier attribué au noeud par l'ADMF de l'IMDU au cours d'une création ou d'une modification de la topologie de réseau LI.

14. Produit programme informatique comprenant un code de programme informatique pouvant être chargé dans un moyen de traitement (300) d'une unité de distribution et de médiation d'interception, IMDU (114), dans lequel le programme informatique comprend un code apte à réaliser le procédé selon la revendication 1, lorsque le code de programme informatique est exécuté dans le moyen de traitement.

15. Produit programme informatique comprenant un code de programme informatique pouvant être chargé dans un moyen de traitement (400) d'un élément de commande d'interception, IMCE (120), dans lequel le programme informatique comprend un code apte à réaliser le procédé selon une ou plusieurs des revendications 2 à 5, lorsque le code de programme informatique est exécuté dans le moyen de traitement.

10

14

IMDU

12

16    18

MF    ADMF    X1_1

LEMF    HI1

HI1    X1_2    X1_3

HI2    24    22

MF2    DF2    X2

20

HI3    MF3    DF3    ICE

X3

28    26

80

LEA

Fig. 1 (Prior art)

100

Service
Server

UE

35

UE

ICE

120

30

X3

168/
166

User Equipment

X1

X2

IMDU

ADMF

MF2/
DF2

MF3/
DF3

114

118

HI1

124/
122

HI2

HI3

LEA

LEMF

CF

CF

180

112

70

72

Fig. 2

LEMF/LEA                    IMDU                    ICE/IP NETWORK

HI1 Request for
LI activation

Warrant

HI1 notification

Intercept target data
traffic for IRI and CC

Intercepted signalling

HI2 IRI Report
mediated

Intercepted data stream
payload

HI3  CC

Intercepted data stream
payload

Intercepted data stream
payload

HI3  CC

Fig. 3

100

data packet flow ⟷ | ICE | ⟷ data packet flow

120    35

X1_1    X2    X3

114    164    X1_3    168

118    CTRL

ADMF    124    MF2    MF3

IMDU    X1_2

116    MF    DF2    DF3    166

122

HI1    HI2    HI3

LEMF

112

180

LEA

Fig. 4

S100

Receiving an request for LI activation comprising a target identity to be intercepted — S110

Generating an extended task identifier (XID) for the target comprising a node identifier part and a pure task identifier — S120

Adding the extended task identifier — S130

Forwarding the warrant to the ICE — S140

Fig. 5

**S100**

Receiving an request for LI activation comprising a target identity to be intercepted — S110

Generating an extended task identifier (XID) for the target comprising a node identifier part and a pure task identifier — S120

Adding the extended task identifier — S130

Forwarding the warrant to the ICE — S140

Forwarding the extended task identifier (XID) to other functions of the IMDU. — S150

Fig. 6

S100

Receiving an request for LI activation comprising a target identity to be intercepted — S110

Generating an extended task identifier (XID) for the target comprising a node identifier part and a pure task identifier — S120

Adding the extended task identifier — S130

Forwarding the warrant to the ICE — S140

Forwarding the extended task identifier (XID) to other functions of the IMDU — S150

Receiving from an ICE IRI and CC data packets wherein at least the headers of the CC data packets comprise the pure task identifier part and not the the node identifer part of the extended task identifier — S160

Identifying the node identifier by means of the data packets source IP address — S170

Correlating the received IRI and CC data packets by means of the pure task identifier part and the node identifier — S180

Forwarding the received IRI and CC data packets to the intercept requesting LEA — S190

Fig. 7

S200

Receiving a warrant for LI activation comprising a target identity to be intercepted and an extended task identifier XID for the target comprising a node identifier part and a pure task identifier part — S210

Intercepting and copying the data traffic of a target for generating IRI and CC data packets whenever a target is identified — S220

Identifying the extended task identifier XID corresponding to the target — S230

Extracting the pure task identifier part of the extended task identifier XID — S240

Adding the pure task identifier part and not the node identifier part of the extended task identifier XID to at least the headers of the CC data packets — S250

Forwarding to the Intercepted Mediation and delivery unit the IRI and CC data packets wherein at least the headers of the CC data packets comprises the pure task identifier part and not the the node identifier part of the extended task identifier — S260

Fig. 8

S200

Receiving a warrant for LI activation comprising a target identity to be intercepted and an extended task identifier XID for the target comprising a node identifier part and a pure task identifier part — S210

Intercepting and copying the data traffic of a target for generating IRI and CC data packets whenever a target is identified — S220

Identifying the extended task identifier XID corresponding to the target — S230

Extracting the pure task identifier part of the extended task identifier XID — S240

Adding the pure task identifier part and not the node identifier part of the extended task identifier XID to at least the headers of the CC data packets — S250

Forwarding to the Intercepted Mediation and delivery unit the IRI and CC data packets wherein at least the headers of the CC data packets comprises the pure task identifier part and not the the node identifier part of the extended task identifier — S260

Forwarding the IRI data packets and CC data packets to the Intercept Mediation and delivery unit via an X2 and X3 interface, respectively — S262

Fig. 9

114

S110
S120
S130
S140

300

Fig. 10

35

S210
S220
S230

S240
S250
S260

400

120

IP data packet flow

IP data packet flow

Tx

430

X1_1

X3

X2

Fig. 11

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Lawful Interception (LI); Internal interface X1. *ETSI DTS 103 221-1 V0.1.0*
- Lawful Interception requirements (Release 8). *3GPP TS 33.106*
- Lawful interception architecture and functions (Release 8). *3GPP TS 33.107*
- Handover interface for Lawful Interception'' (Release 8). *3GPP TS 33.108*